# EUROPÄISCHE PATENTSCHRIFT

(11) **EP 1 748 117 B1**
(45) Veröffentlichungstag und Bekanntmachung des Hinweises auf die Patenterteilung: **07.05.2008**
(21) Anmeldenummer: 05016358.3
(22) Anmeldetag: 28.07.2005
(51) Int. Cl.: E04B 2/70

(54) **Maueraufbau für Holzbauwerke**
Wall construction in a wooden construction
Construction de mur pour une construction en bois

(43) Veröffentlichungstag der Anmeldung: 31.01.2007
(73) Patentinhaber: Gödl, Albin, 4400 Steyr-Garsten (AT)
(72) Erfinder: Gödl, Albin, 4400 Steyr-Garsten (AT)

(56) Entgegenhaltungen:
- EP-A- 0 214 088
- WO-A-95/34721
- DE-A1- 19 962 088

## Beschreibung

Die Erfindung bezieht sich auf einen Sichtfachwerks-Maueraufbau mit witterungsbeständiger Fassade, die die Optik eines Sichtfachwerkbaues aufweist, und dabei eine starke Dämpfung elektromagnetischer Strahlung bewirkt, sowie einem Verfahren mit einem Hilfswerkzeug zu dessen wirtschaftlichen Montage.

Bauwerke und deren Fassaden werden schon Jahrhunderte in Holzfachwerkbauweise ausgeführt. Auch im modernen Bauwesen wird verstärkt auf Holzfachwerkbauweise mit und ohne Sichtfachwerk zurückgegriffen. Fassaden von Bauten mit Holzfachwerkbau ohne Sichtfachwerk werden verputzt oder wetterfest verkleidet und sind damit gut verwahrt. In DE-A-199 62 088 wird ein Maueraufbau für Holzbauwerke genannt, dieser beschreibt jedoch keine Holzbauwerke mit Sichtfachwerk sondern ohne Sichtfachwerk was einen wesentlichen Unterschied darstellt. Verbesserungswürdige Problemstellen treten jedoch bei Bauten mit Sichtfachwerk auf. Die sichtbaren Holzteile des Sichtfachwerkes sind Angriffspunkte für Wetter, Holzschädlinge, Spechte usw. und außerdem begünstigen Spalten und Risse durch verschiedene Materialausdehnung am Übergang zwischen Holz und Ausfachung, Wassereintritt durch Kapilarwirkung. Dadurch werden sowohl Holz als auch Ausfachung zerstört. Dem Stand der Technik gleichlautend wird die Ausfachung verputzt oder mit wetterfesten Ziegeln wie Klinker ausgemauert, wobei wiederum die Mörtelfuge der Klinkerziegel den Schwachpunkt darstellt, da diese bei Nässe im Winter auffriert. Egal welches Material für die Ausfachung und das Sichtfachwerk bisher verwendet wurde, die Dehnungsunterschiede durch Temperatur und Luftfeuchte der verschiedenen Baustoffe, begünstigen Wassereintritt und damit Bauschäden.

Im modernen Bauwesen sollten aber Maueren von Bauwerken außerdem elektromagnetische Funkwellen wie Mobilfunk, Satelitenstrahlung abhalten, da mittlerweile deren gesundheitsbeeinträchtigende Wirkung bekannt ist.

Diese Funktion ist durch eine metallische Außenverkleidung des Sichtfachwerkes und der Ausfachung gegeben, die den Holzaufbau vor Zerstörung schützt und gleichzeitig eine starke Dämpfung elektromagnetischer Strahlung durch Reflexion mit sich bringt.

Der Erfindung liegt somit die Aufgabe zugrunde, eine Holzfachwerksmauer mit der Optik eines Sichtfachwerkes so zu verbessern, daß weder Sichtfachwerk noch Ausfachung Angriffspunkte für Erosion durch Wetter oder sonstige wie oben beschriebene Schädlinge darstellen.

Die Fachwerksmauer eine starke Dämpfung von elektromagnetischen Strahlen bringt, sowie die Befestigung der Ausfachungsbleche schnell und verdeckt erfolgt.

Folgende Aufgaben des Maueraufbaues und des Montageverfahrens sollen erfüllt werden:
1. Schutz von Holz und Ausfachung vor Witterungseinflüssen u. sonstigen Erosionen.
2. Starke Reduktion elektromagnetischer Wellen (Mobilfunk, Satelitenfunk) ins Rauminnere
3. Optik einer Sicht-Holzfachwerksfassade mit verputzter Ausfachung.
4. Schnelle unsichtbare Befestigung der Ausfachung und Sichtfachwerksabdeckung durch ein eigenes Verfahren der Montageabfolge durch den Einsatz einer Bohr-Ansenkvorrichtung

In der Zeichnung ist der Erfindungsgegenstand beispielsweise dargestellt. Es zeigt:
- Fig. 1: Den erfindungsgemäßen in vertikaler Ebene aufgerissenen Sichtfachwerksmaueraufbau

Es zeigen weiter:
- Fig. 2: Die Bohr-Ansenkvorrichtung in einem Schnitt zusammengebaut
- Fig. 3: Die Bohr-Ansenkvorrichtung in einer Explosionszeichnung

Die Erfindung löst die gestellten Aufgaben dadurch, daß der Maueraufbau in folgendem Aufbau, Reihenfolge und unter Einsatz der beschriebenen Materialien und Hilfswerkzeuge (Bohr-Ansenkvorrichtung) ausgeführt wird wie folgt:

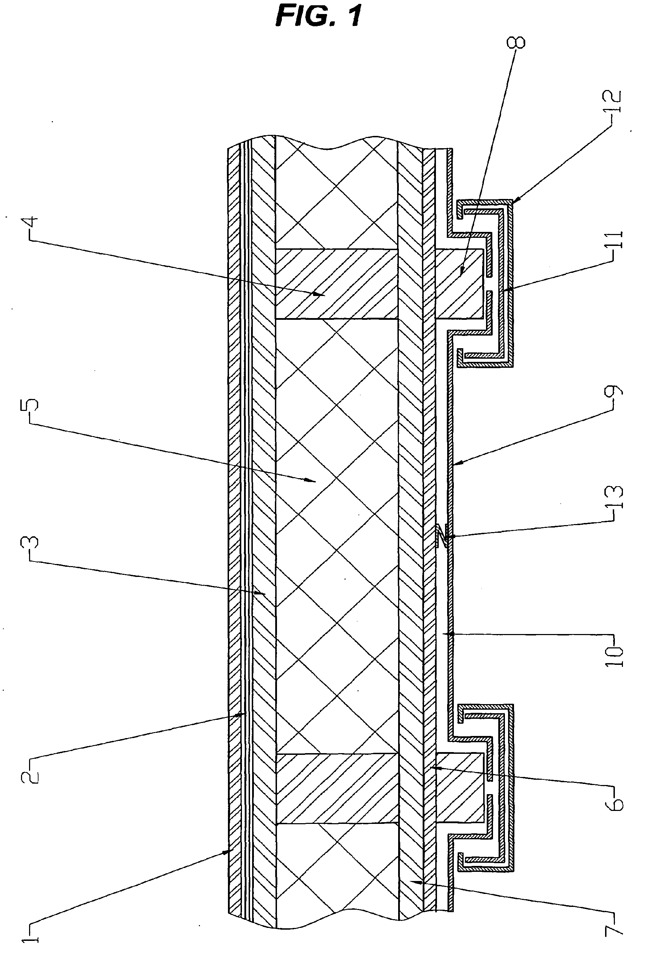

Das Holzfachwerk, bestehend aus statisch tragenden Kanthölzern (4) Fig.1, wird auf der Innenseite mit einer erste Holzplatte (3) und der Außenseite mit einer weiteren Holzplatte (7) verkleidet. Danach wird auf der ersten Holzplatte (3) eine Dampfbremse (2) befestigt. Auf die Dampfbremse (2) erfolgt die Montage einer ersten feuerhemmenden oder feuerfesten Platte (1) vorzugsweise Platten mit hohem Gipsanteil. Auf die Holzplatte (7) erfolgt ebenfalls die Montage einer feuerhemmenden oder feuerfesten Platte (6). Auf diese erfolgt die Montage von Kanthölzern (8) welche in beliebigen Abständen voneinander der gewünschten Optik folgend vertikal, horizontal oder schräg, verschraubt werden. Jene Flächen der Gipsplatte (6) die von den Kanthölzern (8) in vertikaler, horizontaler oder schräger Ebene begrenzt sind, stellen nunmehr die Ausfachung dar und werden mit abgekanteten nichtrostenden Metallblechen (9) in entsprechender konstruktiver Stärke derart verkleidet, daß ein Hinterlüftungspalt (10) erhalten bleibt. Vorzugsweise eignen sich beschichtete Alubleche oder Bleche mit Spritzputzoberfläche wie sie in Patent (AT 409 512 B und AT 411 777 B) beschrieben werden, da diese der verputzten Ausfachung eines historischen Sichtfachwerkbaues am nächsten kommen.

Die Ausfachungsbleche (9) werden nur von vorne auf die Kanthölzer (8) verschraubt. Die Abkanntung des Ausfachungsbleches (9) ist konstruktiv so ausgebildet, daß ein Eindringen von Schlagregen verhindert wird. Wird aus optischen Gründen der Abstand zwischen den Kanthölzern (8) so groß gewählt, daß die Ausfachungsbleche (9) eine Durchbiegung bei Wind erfahren würden, ist als Unterstützung eine Z-Metalleiste (13) in statisch erforderlichen Abständen auf die Platte (6) zu schrauben.

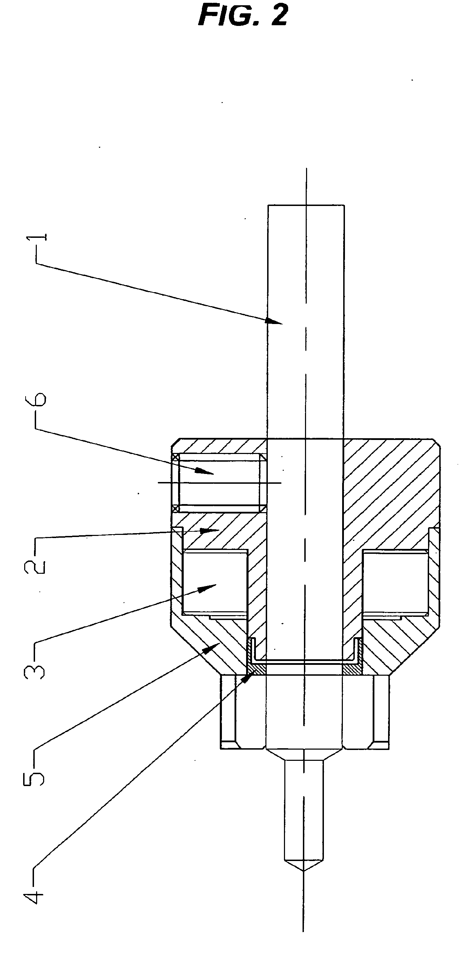

Die Ausfachungsbleche (9) werden dann zusätzlich mit Senkhohlnieten an der Z-Metallleiste (9) befestigt. Die Senklöcher hiefür werden mit der Bohr-Ansenkvorrichtung (Fig. 2) durchgeführt.

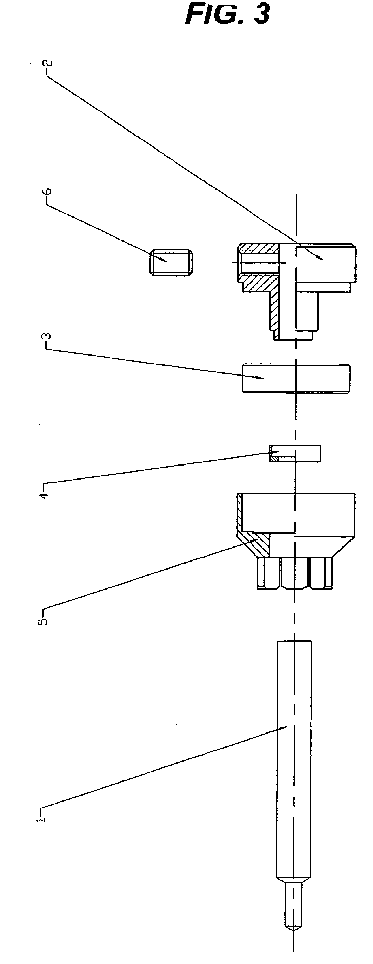

Die Bohr-Ansenkvorrichtung (Fig.3) besteht aus 6 Bauteilen:
1. Stufenbohrer (1) wobei Stufe 1 das Loch in das Ausfachungsblech (9) und die darunterliegende Z-Leiste bohrt die Stufe 2 die Ansenkung am Ausfachungsblech (9) vornimmt.
2. Zylindrischer Metalldrehteil (2) mit Bohrung als Sitz für den Stufenbohrer, das Kugellager und die Wurmschraube
3. Kugellager (3)
4. Späneabweiser (4)
5. Tiefenanschlag (5) als zylindrischer Metalldrehteil mit Durchführung für Späneabweiser und Bohrer
6. Bohrung mit Wurmschraube (6)

Die Bohr-u. Ansenkvorrichtung Fig. 2 erlaubt das Bohren und gleichzeitige tiefengenaue Ansenken der Senknietlöcher ohne Zerkratzen der Ausfachungsbleche (9). Dies ermöglicht der kugelgelagerte Abstandhalter (5) der durch das Kugellager (3) vom Stufenbohrer (1) und dessen zylindrischen Sitz (2) entkoppelt ist. Der Stufenbohrer (1) mit einem Winkel der dem Winkel der Senkniete entspricht, ist mit einer Wurmschraube, die in der Bohrung (6) sitzt, am Metalldrehteil (2) befestigt und kann je nach erforderlicher Ansenktiefe verstellt werden. Die Bohr-Ansenkvorrichtung kann in jede handelsübliche Bohrmaschine mit einer Futterweite bis 10 mm eingespannt werden.

Der Raum zwischen den Kanthölzern (4) und der inneren Holzplatte (3) sowie der äußeren Holzplatte (7) wird mit Wärmedämmung (5) ausgefüllt.

Auf den Kannthölzern (8) wird ein abegekantetes Metallblech in U-Form (11) befestigt, das als Unterkonstruktion für das abgekantete Metallblech des Sichtfachwerks (12) dient. Das abgekantete Blech (12) hält alleine durch die Vorspannung ohne weitere Befestigung. Das U-Blech (11) sollte aus nichtrostendem vorzugsweise aber aus Alu-Blech gefertigt werden. Das Blech des Sichtfachwerkes (12) kann aus allen nichtrostenden Materialien gefertigt werden, vorzugsweise jedoch aus Kupfer, da dessen natürliche Oxidationsschicht dunkelbraun, den klassischen Sichtfachwerksfarben am ähnlichsten ist.

Aus bautechnischer Hinsicht wirkt sich der Hinterlüftungsspalt (10) am Gefache positiv auf Kälte- und Wärmeverhalten sowie Dampfdurchlässigkeit der Mauer aus.

Statt dem Verputzen von Massivwänden oder sonstigen Verkleidungenen von Ziegel- u. Betonmauerwerken können die Bauteile Kantholz (8), die Metallblechteile (9, 11,12 u. 13) als wetterfeste Vorsatzschale montiert werden. Damit erfahren auch diese Massivwände eine starke Reduktion des Durchlasses von elektromagnetischen Wellen ins Rauminnere.

## Patentansprüche

1. Maueraufbau für Holzbauwerke, wobei sich der Maueraufbau aus folgenden Bauelementen in entsprechender Reihenfolge zusammensetzt, beginnend mit einem Kantholz (4) worauf auf der einen Seite eine erste Holzplatte (3) auf der anderen Seite eine weitere Holzplatte (7) befestigt ist, **dadurch gekennzeichnet, daß** auf der ersten Holzplatte (3) eine Dampfbremse (2) und eine erste feuerhemmende Platte (1) montiert ist, während auf der weiteren Holzplatte (7) eine zweite feuerhemmende Platte (6) montiert ist, auf der ein weiteres Kantholz (8) angebracht ist, mit darauf zu montierenden Ausfachungsblechen (9), U-Blechen (11), und Sichtfachwerksblechen (12).

2. Maueraufbau für Holzbauwerke nach Anspruch 1, **dadurch gekennzeichnet, daß** die Kanthölzer (8) in beliebigen Abständen, horizontal, vertikal, und schräg montiert werden können und die Ausfachungsbleche (9) sich dieser Größe anpassen.

3. Maueraufbau für Holzbauwerke nach Anspruch 1 u. 2, **dadurch gekennzeichnet, daß** die Ausfachungsbleche (9) mit dem Verfahren einer Bohr-Ansenkvorrichtung auf Z-Montageleisten (13) gebohrt u. angesenkt werden können.

4. Maueraufbau für Holzbauwerke nach Anspruch 1 - 3 **dadurch gekennzeichnet, daß** die Ausfachungsbleche (9) aus nichtrostenden Metallblechen bestehen.

5. Maueraufbau für Holzbauwerke nach Anspruch 1-4, **dadurch gekennzeichnet, daß** die Ausfachungsbleche (9) mit einem nichtmineralischen Spritzputz oder einer einem Verputz ähnlichen Beschichtung beschichtet werden.

6. Maueraufbau für Holzbauwerke nach Anspruch 1-4, **dadurch gekennzeichnet, daß** die Ausfachungsbleche (9) mit einem nichtmineralischen Spritzputz oder einer einem Verputz ähnlichen Beschichtung beschichtet werden können.

7. Maueraufbau für Holzbauwerke nach Anspruch 1-5, **dadurch gekennzeichnet, daß** die Sichtfachwerksbleche (12) aus nichtrostenden Metallen, vorzugsweise aus Kupferblechen bestehen.

8. Maueraufbau für Holzbauwerke nach Anspruch 1-6, **dadurch gekennzeichnet, daß** die Ausfachungsbleche (9) mit einem Hinterlüftungsspalt (10) zur feuerhemmenden Platte (6) und hin zum Kantholz (8) montiert sind.

## Claims

1. The structure of wall from the following devices in appropriate order, is beginning with a square timber (4) on which on a side is fastened the first wooden plate (3) on the other side a further wooden plate (7), on the first wooden plate (3) a vapor barrier (2) builds itself structure of wall up for timber construction works and method for its assembly, **characterised in that** and a first fire-retardant plate (1) installed during on which further wooden plate (7) a second fire-retardant is installed panel (6), on which a further square timber (8) is attached, also onto it to installing metal sheets (9), U- plates (11), and view framework sheet metals (12).

2. And to be installed diagonally and the metall sheets (9) can adapt structure of wall for timber construction works according to claim 1, **characterised in that** the square timbers (8) in arbitrary spacings, horizontal, to vertical this value.

3. Structure of wall for timber construction works according to claim 1 and. 2, **characterised in that** the metall sheets (9) with the method of a drilling counterboring device on Z-assembly strips (13) bored and. are counterbored.

4. Structure of wall for timber construction works according to claim 1 - 3 **characterised in that** the metall sheets (9) of rustproof metall sheets consists.

5. Structure of wall for timber construction works according to claim 1-4, **characterised in that** the metall sheets (9) with a not-mineral spray plaster or one clean similar coating to be coated.

6. Structure of wall for timber construction works according to claim 1-4, **characterised in that** the metall sheets (9) with a not-mineral spray plaster or one clean similar coating to be coated.

7. Structure of wall for timber construction works according to claim 1-5, **characterised in that** the view framework sheet metals (12) of rustproof metals, preferably of copper sheets consist.

8. Structure of wall for timber construction works according to claim 1-6, **characterised in that** the metall sheets (9) with a backing ventilation gap (10) to the fire-retardant panel (6) and to the square timber (8) to be installed.

## Revendications

1. Construction murale pour ouvrages en bois et procédé pour son montage **caractérisée par le fait que** la construction murale soit composée des éléments de construction suivants dans l'ordre correspondant, en commençant par un bois à arrête (4) sur lequel est fixé sur un côté une première plaque de bois (3) sur l'autre côté une autre plaque de bois (7). Sur la première plaque en bois (3) sont montées un frein à vapeur (2) et une première plaque ignifuge (1), alors qu'une autre plaque en bois (7) et une deuxième plaque ignifuge (6) sont montées sur un autre bois à arrête (8) avec des tôles sur lesquelles sont apposés des hourdages métalliques (9), tôles en U (11), et des tôles en croisillons visibles (12).

2. Construction murale pour ouvrages en bois selon description 1, **caractérisée par le fait que** les bois à arrêtes (2) peuvent être montés à n'importe quelle distance, horizontalement, verticalement et en biais et que les hourdages en tôle (9) s'adaptent à cette taille.

3. Construction murale pour ouvrages en bois selon descriptions 1 et 2, **caractérisée par le fait que** les hourdages métalliques (9) soient percées et inclines selon le procédé du dispositif de perçage et d'emboîtement sur une moulure de montage en Z (13).

4. Construction murale pour ouvrages en bois selon descriptions 1 - 3 **caractérisés par le fait que** des hourdages métalliques (9) sont composés de tôles de métal inoxydables.

5. Construction murale pour ouvrages en bois selon descriptions 1-4, **caractérisée par le fait que** les hourdages métalliques (9) soient recouverts avec un crépi non minéral injecté ou d'un revêtement semblable à un crépi.

6. Construction murale pour ouvrages en bois selon descriptions 1-4, **caractérisée par le fait que** les hourdages métalliques (9) soient recouverts avec un crépi non minéral injecté ou d'un revêtement semblable à un crépi.

7. Construction murale pour ouvrages en bois selon descriptions 1-5, **caractérisé par le fait que** les tôles en croisillons visibles (12) soient composées de métaux inoxydables de préférence en cuivre.

8. Construction murale pour ouvrages en bois selon descriptions 1-6, **caractérisé par le fait que** les hourdages métalliques (9) soient montés avec une fente de ventilation à l'arrière (10) plaques ignifuges (6) et sur un bois à arrête (8).
